# EUROPÄISCHE PATENTANMELDUNG

(11) **EP 1 818 198 A1**
(43) Veröffentlichungstag der Anmeldung: **15.08.2007**
(21) Anmeldenummer: 06026242.5
(22) Anmeldetag: 19.12.2006
(51) Int. Cl.: B60H 1/34

(54) **Fluidleiteinrichtung, insbesondere Luftausströmeinrichtung für Fahrzeuge**

(30) Priorität: 11.02.2006 DE 102006006375
(71) Anmelder: Bayerische Motoren Werke Aktiengesellschaft, 80809 München (DE)
(72) Erfinder: Hofhaus, Jörn, Dr., 85354 Freising (DE); Ziegel, Denis, 80687 München (DE)

(57) **Zusammenfassung**

Fluidleiteinrichtung für Fahrzeuge, insbesondere Luftauslassgrill, mit mindestens einem lamellenartigen Luftleitelement (1a,1b,1c), das dazu vorgesehen ist, die aus der Fluidleiteinrichtung ausströmende Luft in eine gewünschte Richtung zu lenken. Das mindestens eine Luftelement ist flexibel gestaltet. Es kann mittels einer Verstelleinrichtung in seiner Profilform verstellt werden kann.

## Beschreibung

Die vorliegende Erfindung betrifft eine Fluidleiteinrichtung, insbesondere eine Luftausströmeinrichtung für Fahrzeuge gemäß dem Oberbegriff des Patentanspruches 1.

Moderne PKW weisen im Innenraum üblicherweise mehrere "Luftauslasseinrichtungen" auf, die je nach Form bzw. Aufbau als Luftauslassgrill, Luftauslassgitter, Luftauslasswalze etc. bezeichnet werden können. Derartige Luftauslasseinrichtungen weisen üblicherweise eine manuell verstellbare "Fluidleiteinrichtung" auf, mit der die Richtung der ausströmenden Luft sowie ggf. der Volumenstrom manuell oder automatisch durch eine Klimaautomatik gesteuert werden können. Bei der Fluidleiteinrichtung kann es sich beispielsweise um mehrere im Wesentlichen parallel angeordnete lamellenartige Luftleitelemente handeln, die zur Verstellung der Richtung der ausströmenden Luft "parallel" verschwenkt werden können.

Aus der DE 199 56 259 A1 ist eine Fluidleiteinrichtung bekannt, wie sie typischerweise bei einer Vielzahl von Fahrzeugen vorzufinden ist. Im Bereich der Mündungsöffnung eines Luftkanals sind in Strömungsrichtung der Luft beabstandet voneinander eine Vielzahl erster und eine Vielzahl zweiter "Fluidleitelemente" angeordnet. Die ersten und zweiten Fluidleitelemente sind dort durch parallele, schwenkbar angeordnete Lamellen bzw. Klappen gebildet. Die ersten Fluidleitelemente erstrecken sich in vertikaler Richtung und ermöglichen eine horizontale Luftumlenkung. Die zweiten Fluidleitelemente erstrecken sich in Horizontalrichtung und ermöglichen eine vertikale Luftumlenkung. Die Fluidleitelemente sind im Wesentlichen starre Lamellen, die dreh- bzw. schwenkbar im Frischluftgrillgehäuse gelagert sind.

Aus strömungsmechanischer Sicht wäre es wünschenswert, dass die Fluidleitelemente, die im Folgenden auch als Luftleitelemente bezeichnet werden, möglichst tangential und ablösefrei umströmt werden. Die Luftleitelemente sollten also möglichst tangential zu ihrer jeweiligen "Profilsehne" angeströmt werden. Auch die aus dem Luftauslassgrill in den Fahrgastraum ausströmende Luft sollte möglichst tangential zu den Profilsehnen der Luftleitelemente strömen. Bei ablösefreier Umströmung der Luftleitelemente werden die Strömungsgeräusche minimiert. Da bei tangentialer Umströmung der Luftleitelemente der gesamte Austrittsquerschnitt des Luftauslassgrills genutzt werden kann, ergibt sich eine geringere Strömungsgeschwindigkeit der Luft, wodurch sich das "Zuggefühl" im Fahrgastraum verringert.

Eine optimale Umströmung der Luftleitelemente wird bei herkömmlichen Luftauslassgrills, wenn überhaupt, dann nur in einer bestimmten Stellung der Luftleitelemente erreicht. Bewegt man die Luftleitelemente aus dieser Stellung heraus, um die Richtung der in den Fahrgastraum ausströmenden Luft zu verändern, so entsteht ein Winkel zwischen den Profilsehnen der Luftleitelemente und der Richtung der in den Luftauslassgrill einströmenden Luft. Je größer der "Anströmwinkel" der Luftleitelemente ist, desto schlechter wird die Richtwirkung des Luftauslassgrills, d.h. die eingestellte Ausströmrichtung wird nicht in dem gewünschten Maße erreicht. Darüber hinaus entsteht ab einem gewissen Anströmwinkel auf der der Zuströmung abgewandten Seite der Luftleitelemente ein "Ablösegebiet", was zu Strömungsablösungen von den Luftleitelementen, d.h. zu Verwirbelungen und unerwünschten Strömungsgeräuschen führt.

Um die Richtwirkung derartiger "starrer" Luftleitelemente zu gewährleisten, muss die Anzahl und die Länge der Luftleitelemente so aufeinander abgestimmt sein, dass ab einem bestimmten Verstellwinkel die aufgrund von Strömungsablösungen unzureichende Richtwirkung der einzelnen Luftleitelemente durch eine entsprechende Überdeckung der Luftleitelemente kompensiert wird. Daraus ergeben sich entsprechende Einschränkungen beim Design derartiger Luftauslassgrills.

Aufgabe der Erfindung ist es, eine Fluidleiteinrichtung, insbesondere eine Luftausströmeinrichtung für Fahrzeuge zu schaffen, die mindestens ein Luftleitelement aufweist, das stets möglich optimal umströmt ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Fluidleiteinrichtung, insbesondere einer Luftausströmeinrichtung für Fahrzeuge, die mindestens ein lamellenartiges Luftleitelement aufweist, das "flexibel" gestaltet ist. Der Begriff "flexibel" ist in diesem Zusammenhang so zu verstehen, dass die Form des Querschnitts des Luftleitelements und somit dessen Profilsehne in Abhängigkeit von der Richtung der die Luftausströmeinrichtung durchströmenden Luft so eingestellt bzw. verstellt werden kann, dass das Luftleitelement im Wesentlichen tangential umströmt wird. Zur Verstellung des Querschnitts bzw. der Profilsehne des mindestens einen Luftleitelements kann eine entsprechende Verstelleinrichtung vorgesehen sein, die z.B. mechanisch von Hand, elektrisch, hydraulisch, pneumatisch oder in anderer Weise betätigt werden kann. Mittels dieser Verstelleinrichtung wird der Querschnitt des mindestens einen Luftleitelements in Abhängigkeit von der momentanen Lage des Luftleitelements so eingestellt, dass das Luftleitelement tangential angeströmt wird, dass die Luft im Wesentlichen tangential und ablösefrei an dem Luftleitelement entlangströmt und dass die aus der Luftausströmeinrichtung in den Fahrgastraum des Fahrzeugs ausströmende Luft auch im Wesentlichen tangential von dem Luftleitelement abströmt.

Dadurch wird die Gefahr von Strömungsablösungen, d.h. Verwirbelungen und damit einhergehenden unerwünschten Strömungsgeräuschen minimiert und die Richtwirkung der Luftausströmeinrichtung optimiert.

Nach einer Weiterbildung der Erfindung ist das mindestens eine lamellenartige Luftleitelement lageverstellbar, z.B. drehbar bzw. verschwenkbar angeordnet. Zur Verstellung der Lage des mindestens einen lamellenartigen Luftleitelements kann eine separate Verstelleinrichtung vorgesehen sein.

Die Flexibilität des mindestens einen Luftleitelements kann durch die Wahl eines entsprechend biegeelastischen Materials erreicht werden. Alternativ dazu kann das mindestens eine Luftleitelement auch durch mehrere einzelnen im Spritzgussverfahren hergestellte Segmente gebildet sein, vergleichbar mit einer Jalousie-Abdeckung, wie sie z.B. für Staufachabdeckungen im Innenraum von Fahrzeugen verwendet werden. Die einzelnen Segmente können durch Filmscharniere miteinander verbunden sein, wodurch sich ebenfalls eine gewisse "Flexibilität" darstellen lässt.

Im Folgenden wird die Erfindung im Zusammenhang mit der Zeichnung näher erläutert. Es zeigen:
- Figur 1: ein ebenes Luftleitelement, das tangential und ablösefrei umströmt wird;
- Figur 2: ein tragflügelartig gekrümmtes Luftleitelement, das tangential und ablösefrei umströmt wird;

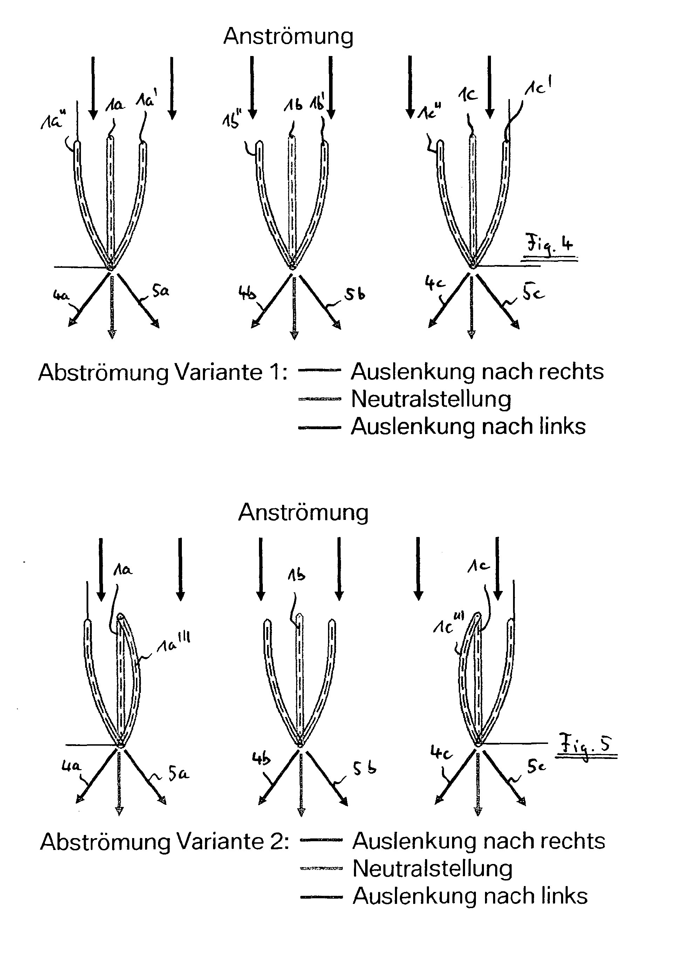

- Figur 3: ein ebenes Luftleitelement entsprechend Figur 1, das verschwenkt ist;
- Figur 4: drei flexible Luftleitelemente in drei verschiedenen Stellungen;
- Figur 5: ebenfalls drei verschiedene Luftleitelemente in drei verschiedenen, modifizierten Stellungen;
- Figur 6: ein Ausführungsbeispiel eines flexiblen Luftleitelements;
- Figur 7: ein weiteres Ausführungsbeispiel eines flexiblen Luftleitelements;
- Figur 8: ein Strömungsbild einer Luftströmung durch einen herkömmlichen Luftauslassgrill;
- Figur 9: ein Strömungsbild durch einen Luftauslassgrill gemäß der Erfindung entsprechend einer der in Figur 4 gezeigten Stellungen der Luftauslasselemente; und
- Figur 10: ein Strömungsbild einer Strömung durch einen Luftauslassgrill gemäß der Erfindung entsprechend einer der in Figur 5 dargestellten Stellungen der Luftleitelemente.

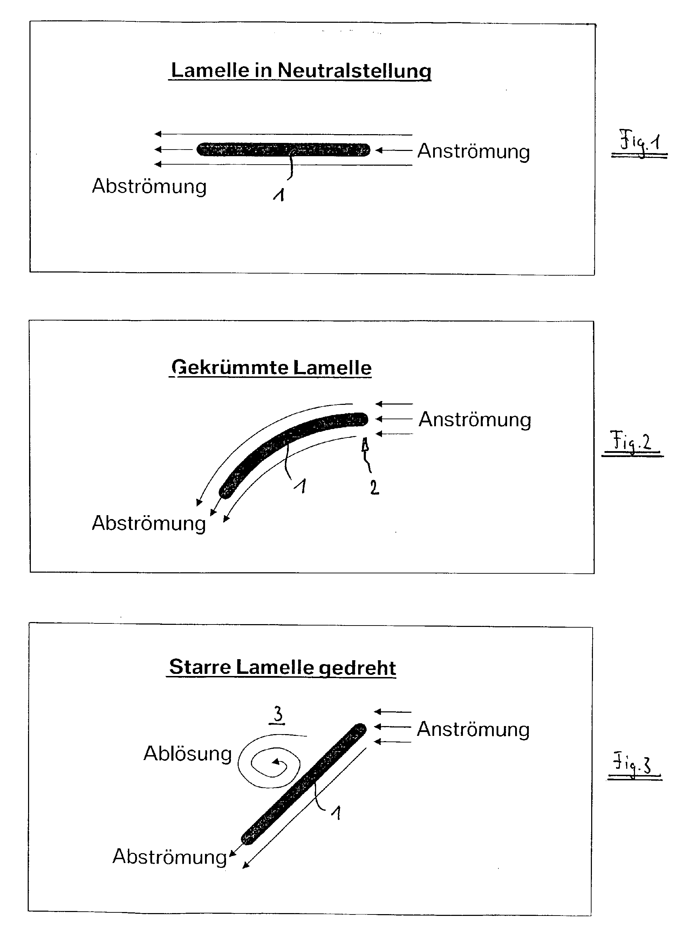

Figur 1 zeigt ein ebenes Luftleitelement 1, das parallel zur Ebene des Luftleitelements angeströmt wird. Die sich ergebende Luftströmung ist somit tangential zu dem Luftleitelement 1 und ablösefrei.

Figur 2 zeigt ein Luftleitelement 1, das ähnlich wie ein Tragflügel eines Flugzeugs bzw. ähnlich wie eine Lamelle einer Jalousie gekrümmt ist. Das Luftleitelement wird an seinem Ende 2 tangential angeströmt. Wenn die Strömungsgeschwindigkeit der Luft nicht zu groß ist, ergibt sich, wie in Figur 2 dargestellt, eine tangentiale ablösefreie Umströmung des Luftleitelements. Es wird also erreicht, dass die Strömungslinien knickfrei verlaufen. Durch das Luftleitelement 1 wird die Luft schräg nach unten abgelenkt und strömt tangential von dem Luftleitelement 1 ab.

Bei den im Fahrgastraum moderner Fahrzeuge vorzufindenden Luftauslassgrills sind üblicherweise mehrere starre lamellenartige Luftleitelemente vorgesehen, die in ihrer Lage verstellt werden können. Durch Lageverstellung der Luftleitelemente kann die Richtung der in den Fahrgastraum einströmenden Luft verstellt werden. Das Querschnittsprofil der einzelnen Luftleitelemente ist jedoch fest vorgegeben, d.h. es kann nicht verstellt werden. Bei einer Lageverstellung des in Figur 1 dargestellten Luftleitelements ergibt sich bei unveränderter Richtung der anströmenden Luft auf der der Strömung abgewandten Seite 3 des Luftleitelements 1 eine Strömungsablösung und somit eine Verwirbelung der Luft, was zu unerwünschten Strömungsgeräuschen führt. Eine Fluidleiteinrichtung bzw. eine Luftausströmeinrichtung gemäß der Erfindung weist demgegenüber mindestens ein Luftleitelement auf, das flexibel gestaltet ist, d.h. dessen Strömungsprofil verändert werden kann, was in den Figuren 4 - 5 sowie 9, 10 dargestellt ist.

Figur 4 zeigt stark vereinfacht einen Luftauslassgrill mit drei Luftleitelementen, 1a, 1b, 1c. In einer "Neutralstellung" sind die Luftleitelement 1a, 1b, 1c eben und werden parallel zu ihrer jeweiligen Ebene angeströmt und umströmt. Wenn die Luft durch den Luftauslassgrill nach unten links gelenkt werden soll, werden die Luftauslasselemente gekrümmt, was durch die Bezugszeichen 1a', 1b', 1c' dargestellt ist. Das anströmseitige Ende der Luftleitelemente 1a', 1b', 1c' ist gegenüber der Neutralstellung nach rechts verschoben, was zu einer Ablenkung der Luft entsprechend der Pfeile 4a - 4c führt.

Soll die Luft durch den Luftauslassgrill nach unten rechts entsprechend der Richtung der Pfeile 5a, 5b, 5c abgelenkt werden, so werden mittels einer nicht näher dargestellten Verstelleinrichtung die Luftleitelemente in die entgegengesetzte Richtung gekrümmt, wobei ihr anströmseitiges Ende nach links verschoben wird. Diese Stellung der Luftleitelemente ist durch die Bezugszeichen 1a", 1b", 1c" angedeutet. Ein Luftauslassgrill, wie er in Figur 4 schematisch dargestellt ist, zeichnet sich dadurch aus, dass die anströmseitigen Enden der Luftleitelemente 1a, 1b, 1c jeweils parallel zur Richtung der anströmenden Luft sind, d.h. die anströmende Luft strömt stets exakt tangential an die anströmseitigen Enden der Luftleitelemente 1a, 1b, 1c heran.

Figur 5 zeigt einen Luftauslassgrill, bei dem die Luftleitelemente 1, 1b, 1c in ihrer Neutralstellung ebenfalls tangential angeströmt und umströmt werden. Bei einer Ablenkung der Luft nach unten links entsprechend der Pfeile 4a, 4b, 4c hingegen ist das Luftleitelement 1a"' so gekrümmt, dass das Luftleitelement 1a"' nicht exakt tangential angeströmt bzw. umströmt wird. Entsprechendes gilt für das Luftleitelement 1c"', wenn die Luftleitelemente so eingestellt werden, dass die Luft entsprechend der Pfeile 5a, 5b, 5c nach unten rechts abgelenkt wird.

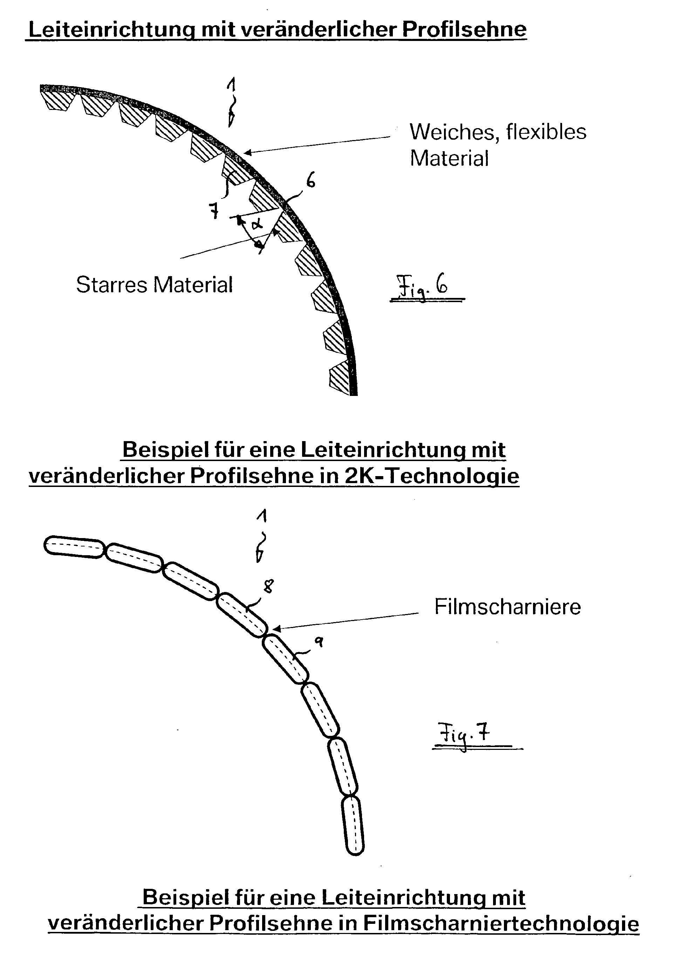

Figur 6 zeigt ein erstes Ausführungsbeispiel eines flexiblen Luftleitelements gemäß der Erfindung. Das Luftleitelement weist eine weiche, flexible Schicht 6 auf, die z.B. durch eine Kunststoff oder Metallfolie gebildet sein kann, und die an ihrer Rückseite durch im Wesentlichen starre Verstärkungselemente 7 versteift ist, die bei dem hier gezeigten Ausführungsbeispiel prismenartige Querschnitte aufweisen. Durch die Freiwinkel α zwischen zwei benachbarten Verstärkungselementen 7 wird die gewünschte Biegeelastizität des Luftleitelements 1 erreicht.

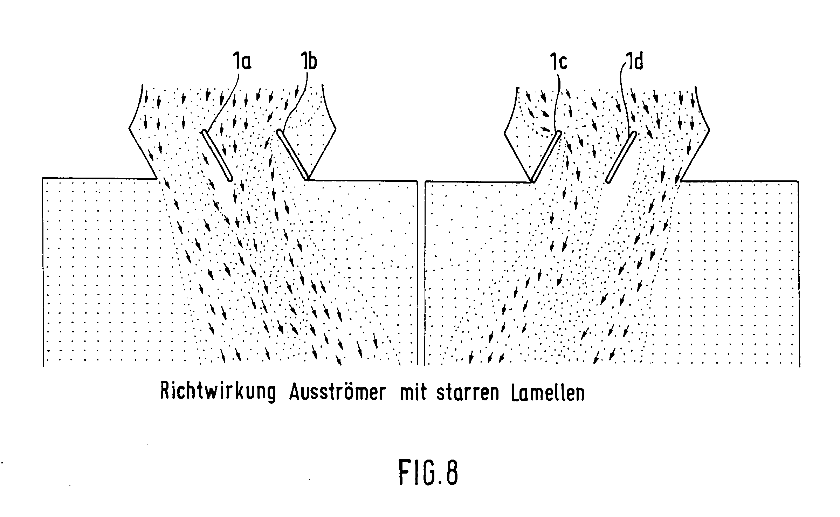

Figur 7 zeigt ein Ausführungsbeispiel, bei dem das Luftleitelement 1 durch mehrere kettenartig hintereinander angeordnete im Wesentlichen starre lamellenartige Elemente 8, 9 gebildet ist, die jeweils schwenkbar miteinander verbunden sind. Die lamellenartigen Elemente 8, 9 können beispielsweise durch ein Filmscharnier miteinander verbunden sein, ähnlich wie die Segmente von Jalousie-Abdeckungen, wie sie von Staufachabdeckungen aus dem Fahrgastraum von Fahrzeugen bekannt sind. Das Luftleitelement der Figur 7 kann im Zweikomponenten-Spritzguss-Verfahren hergestellt werden.

Die Figuren 8-10 verdeutlichen nochmals den Unterschied eines Luftauslassgrills gemäß der Erfindung gegenüber einem herkömmlichen Luftauslassgrill aus strömungsmechanischer Sicht.

Figur 8 zeigt das Strömungsbild eines herkömmlichen Luftauslassgrills, dessen Luftleitelemente 1a, 1b, 1c, 1d eben sind und schräg angeströmt werden. Es ist ersichtlich, dass sich aufgrund der schrägen Anströmung Turbulenzgebiete "Totraum"-Gebiete bilden, was zu unerwünschten Strömungsgeräuschen und bereichsweise unerwünscht hohen Strömungsgeschwindigkeiten führt. Aufgrund fehlender Überdeckung der Luftleitelemente ergibt sich eine schlechte Richtwirkung des Luftauslassgrills.

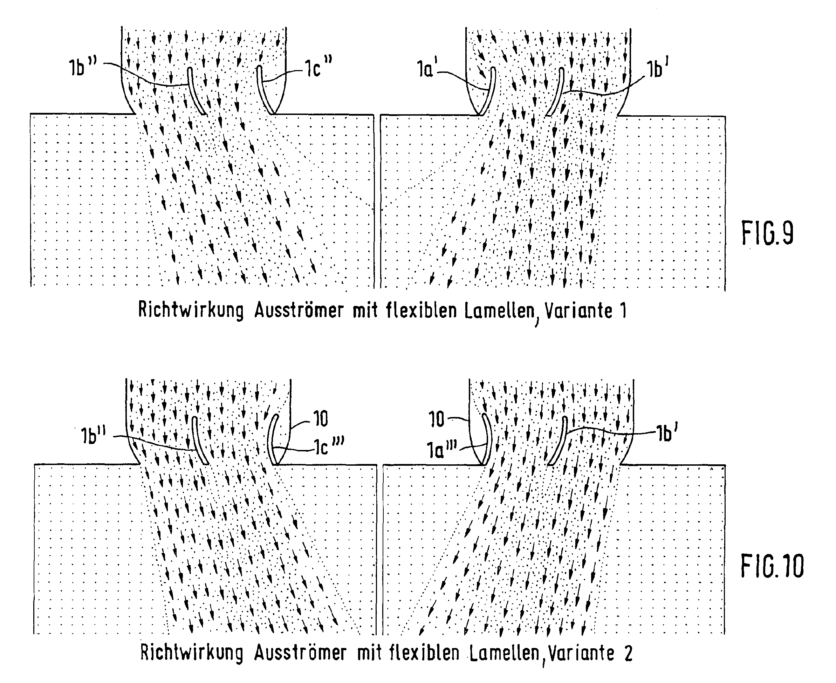

Figur 9 zeigt ein Strömungsbild entsprechend dem in Figur 4 angedeuteten Luftauslassgrill, wobei die Luftleitelemente 1a, 1d flexibel sind. Das Strömungsprofil der Luftleitelemente 1a - 1d ist dabei so eingestellt, dass sie im Wesentlichen parallel angeströmt werden. Dadurch wird eine wesentlich bessere Richtwirkung erreicht.

Figur 10 zeigt einen Luftauslassgrill entsprechend Figur 5, bei dem die Luftleitelemente 1a und 1d anströmseitig senkrecht stehen, was zu einer parallelen Anströmung und Umströmung führt. Um auch bei den Luftleitelementen 1b, 1c eine parallele bzw. tangentiale Umströmung zu erreichen, sind diese anströmseitig nach außen zur Wand des Luftauslassgrills hin gekrümmt. Bei dem Ausführungsbeispiel der Figur 10 wird eine noch bessere Richtwirkung erreicht.

## Patentansprüche

1. Fluidleiteinrichtung für Fahrzeuge, insbesondere Luftauslassgrill, mit mindestens einem lamellenartigen Luftleitelement (1), das dazu vorgesehen ist, die aus der Fluidleiteinrichtung ausströmende Luft in eine gewünschte Richtung zu lenken, **dadurch gekennzeichnet, dass** das mindestens eine Luftleitelement (1) flexibel gestaltet ist und eine Verstelleinrichtung vorgesehen ist, mit der das Strömungsprofil des mindestens einen Luftleitelements (1) verstellt werden kann.

2. Fluidleiteinrichtung nach Anspruch,
**dadurch gekennzeichnet, dass** das Strömungsprofil des mindestens einen Luftleitelements (1) durch die Verstelleinrichtung stets so eingestellt ist, dass das mindestens eine Luftleitelement (1) im Wesentlichen tangential angeströmt wird und die Luft im Wesentlichen tangential an dem mindestens einen Luftleitelement (1) entlang strömt.

3. Fluidleiteinrichtung nach einem der Ansprüche 1 oder 2,
**dadurch gekennzeichnet, dass** das mindestens eine Luftleitelement (1) aus einem biegeelastischen Material hergestellt ist.

4. Fluidleiteinrichtung nach einem der Ansprüche 1 bis 3,
**dadurch gekennzeichnet, dass** das mindestens eine Luftleitelement (1) aus mehreren in sich im Wesentlichen starren lamellenartigen Segmenten (8, 9) gebildet ist, die kettenartig miteinander verbunden sind, wobei aufeinander folgende Segmente schwenkbar miteinander verbunden sind.
